# EUROPÄISCHE PATENTANMELDUNG

(11) **EP 1 401 039 A2**
(43) Veröffentlichungstag der Anmeldung: **24.03.2004**
(21) Anmeldenummer: 03021114.8
(22) Anmeldetag: 19.09.2003
(51) Int. Cl.: H01M 8/02

(54) **Bipolarplatte für PEM-Brennstoffzellen**

(30) Priorität: 19.09.2002 DE 10243592
(71) Anmelder: BASF Future Business GmbH, 67059 Ludwigshafen (DE)
(72) Erfinder: Mehler, Christof, Dr., 67061 Ludwigshafen (DE); Weber, Martin, Dr., 67487 Maikammer (DE); Senge, Michael, 67256 Weisenheim (DE); Kessler, Thomas, 67105 Schifferstadt (DE); Hennig, Ingolf, Dr., 68809 Neulussheim (DE)
(74) Vertreter: Isenbruck, Günter, Dr.

(57) **Zusammenfassung**

Die Bipolarplatte für PEM-Brennstoffzellen aus einem mit die Leitfähigkeit erhöhenden Kohlenstoff-Füllstoffen gefüllten Polymerblend, das mindestens zwei nicht miteinander mischbare Blendpolymere aufweist, ist dadurch gekennzeichnet, daß die mindestens zwei Blendpolymere eine cokontinuierliche Struktur bilden und die Kohlenstoff-Füllstoffe in einem der Blendpolymere oder in der Phasengrenzfläche zwischen den Blendpolymeren angereichert sind, oder daß ein Blendpolymer, in dem die Kohlenstoff-Füllstoffe angereichert sind, eine durchgehend leitfähige Matrix bildet, in der das mindestens eine weitere Blendpolymer eingelagert ist.

## Beschreibung

Die Erfindung betrifft Bipolarplatten für PEM-Brennstoffzellen, ihre Herstellung und Verwendung in PEM-Brennstoffzellen (Brennstoffzellen-Stacks) und deren Anwendung zur Stromversorgung in mobilen und stationären Einrichtungen, wie auch die entsprechenden Werkstoffe.

Bislang werden in Kraftfahrzeugen überwiegend Verbrennungsmotoren zum Antrieb eingesetzt, die Erdölprodukte als Treibstoff erfordern. Da die Ressourcen an Erdöl begrenzt sind und die Verbrennungsprodukte einen nachteiligen Umwelteinfluß haben können, wurden in den letzten Jahren verstärkt Forschungen nach alternativen Antriebskonzepten betrieben.

Die Nutzung von elektrochemischen Brennstoffzellen für mobile und stationäre Energieversorgungen findet dabei zunehmendes Interesse.

Derzeit existieren unterschiedliche Typen von Brennstoffzellen, deren Wirkungsprinzip allgemein auf der elektrochemischen Rekombination von Wasserstoff und Sauerstoff zum Endprodukt Wasser basiert. Sie lassen sich nach Art des verwendeten leitfähigen Elektrolyten, dem Betriebstemperatumiveau und realisierbaren Leistungsbereichen einordnen. Für automobile Anwendungen sind Polymer-Elektrolyt-Membran-Brennstoffzellen (PEM-Brennstoffzellen, auch abgekürzt als PEFC) besonders geeignet. Sie werden üblicherweise bei einer Temperatur im Bereich von 50 bis 90°C betrieben und liefern zur Zeit im kompletten Stack elektrische Leistungen im Bereich von 1 bis 75 kW (PKW) und bis 250 kW (NFZ, Omnibus).

In einer PEM-Brennstoffzelle wird die elektrochemische Reaktion von Wasserstoff mit Sauerstoff zu Wasser durch die Einfügung einer protonenleitenden Membran zwischen die Anoden- und die Kathodenelektrode in die beiden Teilschritte Reduktion und Oxidation aufgeteilt. Hierbei erfolgt eine Ladungstrennung, die als Spannungsquelle genutzt werden kann. Entsprechende Brennstoffzellen sind beispielsweise in "Brennstoffzellen-Antrieb, innovative Antriebkonzepte, Komponenten und Rahmenbedingungen", Skript zur Fachkonferenz der IIR Deutschland GmbH, 29. bis 31. Mai 2000 in Stuttgart zusammengefaßt.
Eine einzelne PEM-Brennstoffzelle weist einen symmetrischen Aufbau auf. Auf eine Polymermembran folgen beidseitig je eine Katalysatorschicht und Gasverteilerschicht, an die sich eine bipolare Platte anschließt. Stromkollektoren dienen zum Abgreifen der elektrischen Spannung, während Endplatten die Zudosierung der Reaktionsgase und Abführung der Reaktionsprodukte sicherstellen.

Die Bipolarplatte verbindet dabei zwei Zellen mechanisch und elektrisch. Da die Spannung einer einzelnen Zelle im Bereich um 1 V liegt, ist es für praktische Anwendungen notwendig, zahlreiche Zellen hintereinander zu schalten. Häufig werden bis zu 150 Zellen, durch Bipolarplatten getrennt, aufeinander gestapelt. Die Zellen werden dabei so aufeinander gestapelt, daß die Sauerstoffseite der einen Zelle mit der Wasserstoffseite der nächsten Zelle über die Bipolarplatte verbunden ist. Die Bipolarplatte erfüllt dabei mehrere Funktionen. Sie dient zur elektrischen Verschaltung der Zellen, zur Zuführung und Verteilung von Reaktanten (Reaktionsgasen) und Kühlmittel und zur Trennung der Gasräume. Dabei muß eine Bipolarplatte folgende Eigenschaften erfüllen:
- chemische Beständigkeit gegen feuchte oxidierende und reduzierende Bedingungen
- Gasdichtheit
- hohe Leitfähigkeit
- geringe Übergangswiderstände
- Maßhaltigkeit
- niedrige Kosten in bezug auf Material und Fertigung
- Gestaltungsfreiheit
- hohe mechanische Belastbarkeit
- Korrosionsbeständigkeit
- geringes Gewicht.

Derzeit werden drei unterschiedliche Arten von Bipolarplatten verwendet. Zum einen werden metallische Bipolarplatten eingesetzt, die beispielsweise aus Edelstählen bzw. beschichteten anderen Werkstoffen, wie Aluminium oder Titan aufgebaut sind.

Metallische Werkstoffe zeichnen sich durch hohe Gasdichtigkeit, Maßhaltigkeit und hohe elektrische Leitfähigkeit aus.

Graphitische Bipolarplatten können durch Pressen oder Fräsen in die geeignete Form gebracht werden. Sie zeichnen sich durch chemische Beständigkeit und geringe Übergangswiderstände aus, haben aber neben einem hohen Gewicht ein unzureichendes mechanisches Verhalten.
Komposit-Materialien sind aus speziellen Kunststoffen aufgebaut, die leitfähige Füllstoffe, etwa auf Basis von Kohlenstoff, aufweisen.

In der WO 98/33224 sind Bipolarplatten aus Eisenlegierungen beschrieben, die hohe Anteile an Chrom und Nickel aufweisen.

Aus der GB-A-2 326 017 sind Bipolarplatten aus Kunststoffmaterial bekannt, die durch elektrisch leitfähige Füllstoffe, wie Kohlepulver leitfähig gemacht werden. Zusätzlich kann eine oberflächliche Metallbeschichtung vorliegen, die über die Kanten der Bipolarplatte eine elektrisch leitfähige Verbindung zwischen zwei Zellen ermöglicht.

Gemäß WO 98/53514 wird ein Polymerharz durch Eintragen eines elektrisch leitfähigen Pulvers und eines Hydrophilisiermittels behandelt. Mit Siliciumdioxidteilchen und Graphitpulver gefüllte Polymermassen werden als Bipolarplatten eingesetzt. Insbesondere finden dabei Phenolharze Anwendung.

DE-A 196 02 315 betrifft flüssigkeitsgekühlte Brennstoffzellen mit Verteilungskanälen in der Zellfläche. Die Zellfläche kann aus verschiedenen Materialien bestehen, je nach ihrer Funktion. Die Separatoren sind z.B. aus Graphit, Titan und/oder Metallegierungen. Zur Vergleichmäßigung des Stromabgriffs werden Gewebe oder Netze aus Materialien verwendet, die ähnlich denen der Separatoren sind. Rahmenbereiche sind z.B. aus Kunststoff gebildet.

In US 5,776,624 ist eine Bipolarplatte aus zusammengelöteten Metallschichten offenbart. Zwischen den Metallschichten sind Kanäle für Kühlmittel. Die Schichten sind über Lötmetall, bevorzugt Ni-Legierungen, leitend gekoppelt.

US 6,071,635 betrifft von Flüssigkeit oder Gas durchströmte Platten, z.B. Bipolarplatten, die aus leitenden und nicht-leitenden Materialien aufgebaut sind. Diese Materialien bilden Teile von Anschlußflächen und/oder Kanälen auf den Oberflächen der Platten. Die leitenden Materialien bilden elektrische Leitungen auf der Oberfläche der Platte und die nicht-leitenden Materialien können Verstärkungen und/oder Abdichtungen der Kanäle oder Teile der Peripherie der Plattenoberfläche bilden. Sie können spritzgegossen werden.

Aus der WO 02/15311 sind Bipolarplatten für PEM-Brennstoffzellen bekannt, die aus einer innenliegenden Metallschicht und zwei beidseitig auf der Metallschicht aufliegenden und diese umschließenden, nicht leitfähigen Kunststoffschichten aufgebaut sind, die die Oberflächen der Bipolarplatten bilden. Als Kunststoffe können Polyamide,

Polybutylenterephthalat, Polyoxymethylen, Polysulfon, Polyethersulfon, Polyphenylenoxid, Polyetherketon, Polypropylen, Polyester, Ethylen-Propylen-Copolymere, ungesättigte Polyesterharze oder Phenol-Formaldehyd-Harze eingesetzt werden.

Beim 17. Stuttgarter Kunststoff-Kolloquium berichteten R. Kaiser und H.-G. Fritz über hochleitfähige Polymer-Compounds für Brennstoffzellen-Anwendungen. Als Polymere wurden ein thermotropes selbstverstärkendes Polyarylat aus Hydroxybenzoesäureeinheiten und Hydroxynaphthalsäureeinheiten und ein Polyphenylensulfid eingesetzt. Zur Verbesserung der Leitfähigkeit wurden den Kunststoffen Ruß bzw. Graphit zugesetzt. Der Einfluß der mittleren Partikelgröße dieser Additive auf das Perkolationsverhalten der Compounds wurde untersucht.

Die WO 01/89013 betrifft eine Bipolarplatte für Protonenaustauschmembran-Brennstoffzellen. Die Bipolarplatte ist aus einem Harz und einer Mehrzahl von Kohlenstoff-Nanotubes aufgebaut, die einen mittleren Durchmesser von 1 bis 300 nm aufweisen. Die Kohlenstofffasern liegen in den Formmassen in einer Menge von etwa 7 bis 85 Gew.-%, vorzugsweise 10 bis 50 Gew.-% vor. Als geeignete Harze werden Polypropylencopolymere, HDPE, Polyacrylnitril, Silikonelastomere, Polyvinylidenfluorid, Polychlortrifluorethylen und Epoxy- und Polyesteramide erwähnt. Zudem können flüssigkristalline Harze eingesetzt werden. Weiterhin können in den Formmassen Verstärkungsmittel wie geschnittene Glasfasern oder Kohlefasern enthalten sein.

WO 00/68299 betrifft Polyphenylenether/Polyamid-Blends, die zur Einstellung der Leitfähigkeit 0,2 bis 3 Gew.-% Füllstoffe in Form eines Gemisches aus Ruß und Kohlenstoff-Fibrillen enthalten können. Als Anwendung werden Außenkomponenten im Automobilbereich, die elektrotauchlackiert werden können, genannt. Es ist beschrieben, daß eine Polymerphase in einer kontinuierlichen Phase dispergiert vorliegt.
Da Bipolarplatten kritische Funktionselemente von PEM-Brennstoffzellen-Stacks sind, die zu einem erheblichen Anteil zu den Kosten und dem Gewicht der Stacks beitragen, besteht große Nachfrage nach Bipolarplatten, die das vorstehend genannte Anforderungsprofil erfüllen und die Nachteile der bekannten Bipolarplatten vermeiden. Insbesondere soll eine unaufwendige und kostengünstige Fertigung von Bipolarplatten möglich sein.

Die Aufgabe wird erfindungsgemäß gelöst durch eine Bipolarplatte für PEM-Brennstoffzellen aus einem mit die Leitfähigkeit erhöhenden Kohlenstoff-Füllstoffen gefüllten Polymerblend, das mindestens zwei nicht miteinander mischbare Blendpolymere aufweist, wobei die mindestens zwei Blendpolymere eine cokontinuierliche Struktur bilden und die Kohlenstoff-Füllstoffe in einem der Blendpolymere oder in der Phasengrenzfläche zwischen den Blendpolymeren angereichert sind, oder daß ein Blendpolymer, in dem die

Kohlenstoff-Füllstoffe angereichert sind, eine durchgehend leitfähige Matrix bildet, in der das mindestens eine weitere Blendpolymer eingelagert ist.

Es wurde erfindungsgemäß gefunden, daß vorteilhafte Bipolarplatten für PEM-Brennstoffzellen erhalten werden, wenn zu ihrer Herstellung ein Polymerblend eingesetzt wird, das mindestens zwei nicht miteinander mischbare Blendpolymere aufweist, die eine cokontinuierliche Struktur bilden oder eine Matrix eines leitfähigen Polymers aufweisen. Der Ausdruck "nicht miteinander mischbar" bedeutet, daß die Blendpolymere beim Vermischen weitgehend voneinander getrennte Phasen ausbilden und sich nicht ineinander lösen oder nicht miteinander mischen. Ein Anteil von bis zu 10 Gew.-%, vorzugsweise bis zu 5 Gew.-% von ineinander gelösten oder miteinander vermischten Blendpolymeren fällt dabei mit unter den Ausdruck "nicht miteinander mischbar". Vorzugsweise sind die Blendpolymere insgesamt nicht miteinander mischbar. Der Ausdruck "cokontinuierliche Struktur" bezieht sich auf eine Struktur, in der beide Blendpolymere eine kontinuierliche Phase ausbilden und nicht etwa Teilchen eines Blendpolymers in dem anderen Blendpolymer als kontinuierlicher Phase verteilt vorliegen. Die cokontinuierliche Struktur kann beispielsweise auch als interpenetrierendes Netzwerk beschrieben werden, wobei Netzwerke der einzelnen Blendpolymere ausgebildet werden, die miteinander verwoben sind bzw. sich gegenseitig penetrieren. Eine cokontinuierliche Struktur läßt sich einfach durch Morphologieanalysen nachweisen. Derartige Morphologieanalysen können mikroskopische Standardmethoden, beispielsweise Reflektions- und Fluoreszenz-Bilder von Querschnitten durch ein Polymerblend sein. Domänengrößen liegen zum Beispiel im Bereich bis zu einigen Mikrometern, zum Beispiel 0,5 - 50 µm. Eine leitfähige Matrix wird erhalten, wenn ein Blendpolymer eine durchgehende bzw. kontinuierliche Struktur bildet und mit den Kohlenstoff-Füllstoffen angereichert ist.

Die in den erfindungsgemäß eingesetzten Polymerblends enthaltenen Kohlenstoff-Füllstoffe sind vorzugsweise ausgewählt aus Leitfähigkeitsruß, Graphit, Kohlenstofffasern, Kohlenstoff-Nanotubes oder Gemischen davon. Kohlenstoff-Nanotubes weisen vorzugsweise einen mittleren Durchmesser im Bereich von 1 bis 300 nm auf. Kohlenstoff-Nanotubes können beispielsweise von Applied Sciences Inc. oder Hyperion Catalysis International erworben werden. Derartige Kohlenstoff-Nanotubes sind beispielsweise in WO 01/89013, US 5,651,922 und US 5,643,502 wie auch in WO 01/36536 und WO 00/68299 beschrieben.

Es kann sich um einwandige oder mehrwandige Kohlenstoff-Nanotubes handeln. Die Nanotubes können dabei einzeln oder in Bündelform, beispielsweise als hexagonal angeordnete Bündel vorliegen. Die Herstellung der Kohlenstoff-Nanotubes kann durch katalytische chemische Dampfabscheidung (catalytic chemical vapor deposition) unter Umgebungsdruck oder Hochdruck erfolgen, wie auch durch ein Graphitfunkenverfahren in

Gegenwart oder Abwesenheit eines Katalysators oder durch ein Laser-Dampf-Abscheidungs-Verfahren in Gegenwart eines Katalysators. Derartige Verfahren sind beispielsweise in Carbon, Band 32, Seite 569 (1994), Nature, Band 354, Seite 56 (1991) und Science, Band 273, Seite 483 (1996) beschrieben.

Bei mehrwandigen Kohlenstoff-Nanotubes beträgt der Durchmesser vorzugsweise 10 bis 200 nm, wobei der mittlere Durchmesser von einwandigen Kohlenstoff-Nanotubes vorzugsweise 0,5 bis 5 nm beträgt. Die mittlere Länge der Kohlenstoff-Nanotubes kann beispielsweise im Bereich von 1 bis 1000 µm liegen.

Leitfähigkeitsruß kann beispielsweise von Degussa erhalten werden. Unterschiedliche Qualitäten mit Unterschieden in der Struktur, der Oberflächen-Chemie und dem Benetzungsverhalten können eingesetzt werden. Die spezifische Oberfläche der feinteiligen, teilmikrokristallinen Kohlenstoffe beträgt vorzugsweise 10 bis 2000 m²/g, für hochleitfähige Anwendungen vorzugsweise 800 bis 1250 m²/g, gemessen durch Stickstoffadsorption. Der Aggregationszustand (Struktur) derartiger feinteiliger Feststoffe kann mit der DBP-Zahl (Di-Butyl-Phthalat) beschrieben werden. Ein hoher DBP-Wert weist auf ein großes Porenvolumen und damit auf eine hohe Strukturierung (Porosität) hin. Die DBP-Zahlen der erfindungsgemäß eingesetzten Ruße liegen vorzugsweise im Bereich von 50 bis 1000 ml DBP/( 100 g CB).

Graphit wird vorzugsweise mit einem mittleren Teilchendurchmesser im Bereich von 50 bis 500 µm eingesetzt. Die Teilchengrößenverteilung erstreckt sich dabei vorzugsweise über 3 Dekaden, beispielsweise von 10 bis 1000 µm.

Kohlenstofffasern sind dem Fachmann bekannt und können sich von unterschiedlichen Quellen ableiten. Vorzugsweise werden Kohlenstofffasern mit einem mittleren Durchmesser im Bereich von 1 bis 50 µm und einer Faserlänge im Bereich von 10 µm bis 50 mm, z.B. 50 µm bis 30 mm eingesetzt.

In den erfindungsgemäß verwendeten Polymerblends liegen mindestens zwei nicht miteinander mischbare Blendpolymere vor. Vorzugsweise liegen 2 bis 4, besonders bevorzugt 2 oder 3, insbesondere 2 Blendpolymere vor. Vorzugsweise weisen die Blendpolymere unterschiedliche Polaritäten auf, und die Kohlenstoff-Füllstoffe sind in dem polareren Blendpolymer angereichert.

Die Blendpolymere können beispielsweise ausgewählt sein aus Polyamiden, Polybutylenterephthalat, Polyoxymethylen, Polysulfon, Polyethersulfon, Polyether, Polyphenylenoxid, Polyetherketon, Polypropylen, Polyester, Ethylen-Propylen-Copolymeren usw.. Die mit Kohlenstoff-Füllstoffen angereicherten Blendpolymere sind
dabei vorzugsweise teilkristallin und thermoplastisch. Der Fachmann wird geeignete Kombinationen von Blendpolymeren auswählen, so daß die Blendpolymere nicht miteinander mischbar sind und unterschiedliche Polaritäten aufweisen. Vorzugsweise wird mit einem Zweikomponenten-System gearbeitet, in dem die beiden Blendpolymere unterschiedliche Funktionen erfüllen: das weniger polare Blendpolymer dient zur Einstellung der gewünschten mechanischen Eigenschaften, während das polarere Polymer, in dem auch die Kohlenstoff-Füllstoffe angereichert sind, für die notwendige Leitfähigkeit verantwortlich ist.

Besonders bevorzugt wird erfindungsgemäß ein Polymerblend aus Polyamid und Polyethersulfon oder dessen Copolymeren eingesetzt. Das Polyamid stellt dabei die polarere Blendkomponente dar, die für die Ausbildung der Leitfähigkeit erforderlich ist. Das Polyethersulfon dient zur Einstellung der gewünschten und erforderlichen mechanischen Eigenschaften. Gegebenenfalls kann es Copolymer-Komponenten enthalten. Als Polyamid wird vorzugsweise ein Polyamid66 eingesetzt, das sich aus Adipinsäure- und Hexamethylendiamin-Einheiten ableitet. Die Viskosität (VZ) beträgt vorzugsweise 130 bis 170 ml/g, insbesondere etwa 150 ml/g, bestimmt nach ISO 307 (0,5%ig in konzentrierter H₂SO₄).

Als Polyethersulfon wird vorzugsweise ein rein oder gemischt aromatisches Polyethersulfon (PES) eingesetzt. Dabei liegen neben den Ether- und Sulfon-Brücken vorzugsweise nur Phenylengruppen, insbesondere 1,4-Phenylengruppen oder von Bisphenol-A abgeleitete Einheiten, vor.

Als Polyarylenethersulfon kann eines mit wiederkehrenden Einheiten der Formel I₁ verwendet werden, Ultrason® E 2010, Handelsprodukt der BASF Aktiengesellschaft. Dieses Produkt ist charakterisiert durch eine Viskositätszahl von 54 ml/g, gemessen in 1%iger NMP-Lösung bei 25°C.

Als Polyarylenethersulfon kann zudem eines mit wiederkehrenden Einheiten der Formel I₂, Ultrason® S 2010, Handelsprodukt der BASF Aktiengesellschaft, eingesetzt werden. Dieses Produkt ist charakterisiert durch eine Viskositätszahl von 56 ml/g, gemessen in 1%iger NMP-Lösung bei 25°C. Dieses Polyarylenethersulfon wurde in den Beispielen eingesetzt. Es wird häufig auch als Polysulfon bezeichnet.

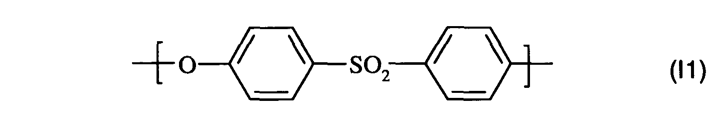

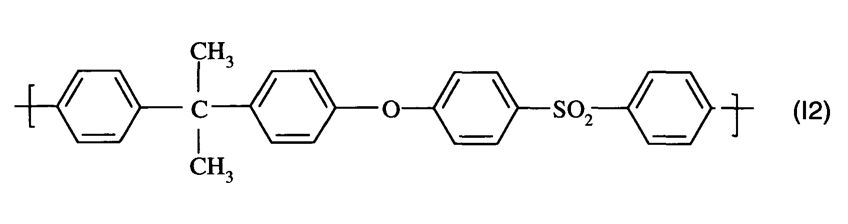

Die Eigenschaften der Polymere werden dabei so gewählt, daß das Polyamid in Kombination mit den Kohlenstoff-Füllstoffen eine ausreichende Leitfähigkeit in der cokontinuierlichen Struktur bereitstellt. Dafür ist es vorteilhaft, daß die Kohlenstoff-Füllstoffe in der Polyamid-Phase angereichert sind. Dies bedeutet, daß vorzugsweise 60 bis 100%, besonders bevorzugt 70 bis 100% der Kohlenstoff-Füllstoffe in der Polyamidphase vorliegen.

Bezogen auf den gesamten gefüllten Polymerblend liegen vorzugsweise 25 bis 95 Gew.-%, besonders bevorzugt 35 bis 90 Gew.-%, insbesondere 45 bis 85 Gew.-% Blendpolymere und 5 bis 75 Gew.-%, besonders bevorzugt 10 bis 65 Gew.-%, insbesondere 15 bis 55 Gew.-% Kohlenstoff-Füllstoffe vor.

Bevorzugte Untergrenzen für die Kohlenstoff-Füllstoffe sind mindestens 10% oder mindestens 20%.

Im Polymerblend aus Polyamid, vorzugsweise PA66 und Polyethersulfon beträgt das Gewichtsverhältnis von Polyamid zu Polyethersulfon vorzugsweise 1:8 bis 8:1, besonders bevorzugt 1:4 bis 6:1, insbesondere 1:1,6 bis 4:1.

Im Polymerblend liegen als Kohlenstoff-Füllstoffe
vorzugsweise 1 bis 30 Gew.-%, besonders bevorzugt 2 bis 20 Gew.-%, insbesondere 4 bis 15 Gew.-% Leitfähigkeitsruß,
vorzugsweise 5 bis 60 Gew.-%, besonders bevorzugt 8 bis 50 Gew.-%, insbesondere 10 bis 40 Gew.-% Kohlenstofffasern und
vorzugsweise 0 bis 25 Gew.-%, besonders bevorzugt 0 bis 15 Gew.-%, insbesondere 0 bis 10,5 Gew.-% Kohlenstoff-Nanotubes vor.

Dabei ergibt die Gesamtmenge der Kohlenstoff-Füllstoffe 6 bis 70 Gew.-%, wobei alle Werte auf das Gesamtgewicht des gefüllten Polymerblends bezogen sind.

Sofern Kohlenstoff-Nanotubes vorliegen, beträgt ihre Menge minimal 1 Gew.-%, vorzugsweise minimal 2 Gew.-%, insbesondere minimal 3 Gew.-%. Als Obergrenzen gelten die vorstehend angegebenen bevorzugten Bereiche.
Die erfindungsgemäße Bipolarplatte ist im allgemeinen flächig ausgestaltet und weist damit zwei gegenüberliegende Oberflächen auf. Im Kantenbereich werden die Bipolarplatten mit anderen Komponenten der Brennstoffzellen zu Stacks zusammengepreßt. Daher weisen die erfindungsgemäßen Bipolarplatten in diesen Randbereichen der Oberfläche vorzugsweise geeignete Mittel zur gasdichten Verbindung der Bipolarplatten mit den anderen Komponenten der Zellen auf oder sind zur Aufnahme derartiger Mittel eingerichtet.

Die Erfindung betrifft auch ein Verfahren zur Herstellung von Bipolarplatten, wie sie vorstehend beschrieben sind, durch Herstellen und Verformen des gefüllten Polymerblends. Die Formgebung kann dabei nach allen geeigneten bekannten Verfahren erfolgen, beispielsweise durch Spritzgießen oder Spritzprägen.

Die Erfindung betrifft auch das beschriebene gefüllte Polymerblend mit cokontinuierlicher Struktur.

Die Kunststoffstruktur weist dabei im Oberflächenbereich die erforderlichen Kanäle zum Gastransport auf.

Die Bipolarplatte aus Kunststoff weist im allgemeinen eine Plattendicke von > 1 mm, häufig > 2 mm auf. Bevorzugt beträgt die Plattendicke 2,1 mm bis 5,0 mm, besonders bevorzugt 2,5 mm bis 3,5 mm. Die Plattendicken von bisher eingesetzten Bipolarplatten betragen überlicherweise 5 mm. Somit kann, bei der Vielzahl an Einzelplatten, die für einen Brennstoffzellen-Stack verwendet werden, über die mit den erfindungsgemäßen Bipolarplatten erreichte Reduzierung der Plattendicke sowie durch die Verwendung von Kunststoff anstelle von z.B. Graphit das Gesamtgewicht sowie der in Anspruch genommene Bauraum einer Brennstoffzelle erheblich verringert werden.

Die erfindungsgemäßen Bipolarplatten werden im allgemeinen in PEM-Brennstoffzellen bzw. in Brennstoffzellen-Stacks aus mehreren Einzelzellen eingesetzt. Derartige Brennstoffzellen-Stacks werden durch wiederholtes Aufeinanderschichten von Bipolarplatte, Gasverteilerschicht, Katalysatorschicht, Polymermembran, Katalysatorschicht und Gasverteilerschicht hergestellt. Zwischen jeweils zwei Bipolarplatten liegt dabei eine

Einzelzelle vor. Zudem werden endständige Stromkollektoren und Endplatten angefügt. Die aufeinandergeschichteten Elemente des Brennstoffzellen-Stacks werden verbunden und abgedichtet. Zur Abdichtung können im Randbereich der erfindungsgemäßen Bipolarplatten Elastomerdichtungen aufgebracht sein, oder es kann eine Nahtgeometrie für das
nachträgliche Schweißen, Kleben oder Spritzschweißen direkt aus dem Kunststoff angeformt werden.

Im ersteren Fall erfolgt die Abdichtung durch festes Aufeinanderpressen der Platten. Im zweiten Fall können die Platten untereinander verschweißt oder verklebt werden. Das Verschweißen kann nach beliebigen geeigneten Verfahren durchgeführt werden, beispielsweise im Ultraschall-, Heizelement-, Vibrations- oder Laserschweißverfahren. Die einzelnen Elemente der Brennstoffzellen können auch durch Verkleben oder Spritzschweißen verbunden und abgedichtet werden.

Der Brennstoffzellen-Stack kann auch durch Umspritzen des gesamten Plattenstapels im Spritzgußverfahren mit geeigneten Polymerwerkstoffen abgedichtet und verbunden werden.

Eine angeformte Elastomerdichtung kann beispielsweise im Zwei-Komponenten-Spritzguß gleichzeitig mit der Kunststoffschicht ausgebildet werden.

Insbesondere das Vorsehen eines erhöhten umlaufenden Randes mit angeformter Schweißnahtgeometrie erlaubt ein kostengünstiges gasdichtes Verbinden der Elemente zu einem Brennstoffzellen-Stack.

Die erfindungsgemäßen Brennstoffzellen-Stacks können beispielsweise zur Stromversorgung in mobilen und stationären Einrichtungen eingesetzt werden. Neben einer Hausversorgung kommen dabei insbesondere die Stromversorgung von Fahrzeugen, wie Land-, Wasser- und Luftfahrzeugen sowie autarken Systemen, wie Satelliten, in Betracht.

Die erfindungsgemäßen Brennstoffzellen-Stacks sind vorzugsweise in einem Temperaturbereich von -40 bis +120°C stabil. Der Arbeitstemperaturbereich liegt dabei insbesondere im Bereich um 100°C. Die Temperierung kann dabei durch geeignete Kühlmedien erreicht werden, die zumindest mit einem Teil des Stacks in Verbindung stehen.

Die erfmdungsgemäßen Bipolarplatten vereinen eine vorteilhafte Kombination von niedrigem Gewicht, guter elektrischer Leitfähigkeit, Gasdichtigkeit, bzw. Abdichtbarkeit und Gestaltung von Gaskanälen.

Die Erfindung wird durch die nachstehenden Beispiele näher erläutert:

### Beispiel 1

Ein Polymerblend wurde durch Abmischen von Polyamid66 (PA66) mit einer VZ = 150 ml/g, das 25 Gew.-% Ruß enthielt, mit Polyethersulfon (PES), Ultrason® S 2010 hergestellt. Zudem wurden Kohlenstofffasern in den Polymerblend eingetragen. Der gefüllte Polymerblend wies die folgende Zusammensetzung auf: Polyethersulfon: 30 Gew.-%; Polyamid66: 22,5 Gew.-%; Leitruß (DBP-Wert: 119 ml/100g) (Printex® L von Degussa): 7,5 Gew.-%; Kohlenstofffasern (Fortafil® 243): 40 Gew.-%.

Der Polymerblend zeigte eine spezifische Leitfähigkeit von 22 S/cm.

Die Herstellung dieses und der im folgenden beschriebenen Blends erfolgte auf einem Zweischnecken-Extruder (ZSK 40, Schneckendesign 24D).

Eine Morphologieanalyse durch confocal Laser Scan Microscopy (CLSM) zeigte eine cokontinuierliche Struktur der Blendpolymere, wobei die leitfähigen Kohlenstoff-Füllstoffe ganz überwiegend in der Polyamidphase enthalten waren.

### Beispiele 2 bis 4

Wie in Beispiel 1 wurden die folgenden unterschiedlichen gefüllten Polymerblends hergestellt. Die Leitfähigkeit wurde gemäß ISO 3915 (4-Punkt-Verfahren) bestimmt. Die Ergebnisse sind in der nachfolgenden Tabelle zusammengefaßt.

| Beispiele | Blends | spezifische Leitfähigkeit [S/cm] | |
|---|---|---|---|
| | | σII4 | *σ*┴4 |
| 2 | 10% PES, 40% PA66, 10% Ruß, 40% C-Fasern | 14 | 6 |
| 3 | 30% PES, 23,25% PA66, 6,75% Ruß, 40% C-Fasern | 21 | 4 |
| 4 | 50% PES, 32% PA66, 4% Ruß, 10% C-Fasern, 4% C-Nanotubes | 3 | 0,11 |
| 5 | 30% PES, 22,5% PA66, 7,5% Ruß, 40% C-Fasern | 22 | 1,7 |
| G II4: Leitfähigkeit in Plattenebene | | | |
| G I4: Leitfähigkeit senkrecht zur Plattenebene | | | |

## Patentansprüche

1. Bipolarplatte für PEM-Brennstoffzellen aus einem mit die Leitfähigkeit erhöhenden Kohlenstoff-Füllstoffen gefüllten Polymerblend, das mindestens zwei nicht miteinander mischbare Blendpolymere aufweist, **dadurch gekennzeichnet, daß** die mindestens zwei Blendpolymere eine cokontinuierliche Struktur bilden und die Kohlenstoff-Füllstoffe in einem der Blendpolymere oder in der Phasengrenzfläche zwischen den Blendpolymeren angereichert sind, oder daß ein Blendpolymer, in dem die Kohlenstoff-Füllstoffe angereichert sind, eine durchgehend leitfähige Matrix bildet, in der das mindestens eine weitere Blendpolymer eingelagert ist.

2. Bipolarplatte nach Anspruch 1, **dadurch gekennzeichnet, daß** die Kohlenstoff-Füllstoffe ausgewählt sind aus Leitfähigkeitsruß, Graphit, Kohlenstofffasern, Kohlenstoff-Nanotubes oder Gemischen davon.

3. Bipolarplatte nach Anspruch 1 oder 2, **dadurch gekennzeichnet, daß** das Polymerblend 25 bis 95 Gew.-% Blendpolymere und 5 bis 75 Gew.% Kohlenstoff-Füllstoffe enthält.

4. Bipolarplatte nach Anspruch 3, **dadurch gekennzeichnet, daß** im Polymerblend als Kohlenstoff-Füllstoffe
1 bis 30 Gew.-% Leitfähigkeitsruß,
5 bis 60 Gew.-% Kohlenstofffasern und
0 bis 25 Gew.-% Kohlenstoff-Nanotubes vorliegen,
wobei die Gesamtmenge an Kohlenstoff-Füllstoffen 6 bis 70 Gew.-% beträgt, jeweils bezogen auf das Gesamtgewicht des Polymerblends.

5. Bipolarplatte nach einem der Ansprüche 1 bis 4, **dadurch gekennzeichnet, daß** die Blendpolymere unterschiedliche Polaritäten aufweisen und die Kohlenstoff-Füllstoffe in dem polareren Blendpolymer angereichert sind.

6. Bipolarplatte nach Anspruch 5, **dadurch gekennzeichnet, daß** im Polymerblend mindestens ein Polyamid und mindestens ein Polyetherketon oder Polyethersulfon als Blendpolymere vorliegen.

7. Bipolarplatte nach Anspruch 6, **dadurch gekennzeichnet, daß** im Polymerblend das Gewichtsverhältnis von Polyamid zu Polyetherketon/Polyethersulfon 1:8 bis 8:1 beträgt.

8. Verfahren zur Herstellung von Bipolarplatten nach einem der Ansprüche 1 bis 7 durch Herstellen und Verformen des mit die Leitfähigkeit erhöhenden Kohlenstoff-Füllstoffen gefüllten Polymerblends.

9. PEM-Brennstoffzelle, enthaltend Bipolarplatten gemäß einem der Ansprüche 1 bis 7.

10. Verwendung von PEM-Brennstoffzellen nach Anspruch 9 zur Stromversorgung in mobilen und stationären Einrichtungen.

11. Mit die Leitfähigkeit erhöhenden Kohlenstoff-Füllstoffen gefülltes Polymerblend mit conkontinuierlicher Struktur, wie es in einem der Ansprüche 1 bis 7 definiert ist.
